**Europäisches Patentamt**

**European Patent Office**

**Office européen des brevets**

(19)

(11) Numéro de publication : **0 365 410 B1**

# FASCICULE DE BREVET EUROPEEN

(12)

(45) Date de publication du fascicule du brevet :
**23.12.92 Bulletin 92/52**

(51) Int. Cl.⁵ : **B01D 63/08**

(21) Numéro de dépôt : **89402836.4**

(22) Date de dépôt : **13.10.89**

(54) **Cadre séparateur pour dispositifs d'échange entre deux fluides.**

(30) Priorité : **17.10.88 FR 8815307**

(43) Date de publication de la demande :
**25.04.90 Bulletin 90/17**

(45) Mention de la délivrance du brevet :
**23.12.92 Bulletin 92/52**

(84) Etats contractants désignés :
**AT BE CH DE ES FR GB GR IT LI LU NL SE**

(56) Documents cités :
**DE-A- 2 164 284**
**FR-A- 1 281 549**
**US-A- 3 878 086**

(56) Documents cités :
**US-A- 4 319 978**
**PATENT ABSTRACTS OF JAPAN, vol. 11, no. 202 (C-432)[2469], 30 juillet 1987, page 107 C 432**

(73) Titulaire : **EURODIA S.A.**
**1, boulevard Hippolyte Marquès**
**F-94200 Ivry-sur-Seine (FR)**

(72) Inventeur : **Guerif, Gérard**
**15, rue Pierre Mendès France**
**91790 Boissy-sous-Saint-Yon (FR)**

(74) Mandataire : **Descourtieux, Philippe et al**
**CABINET BEAU de LOMENIE 55 rue d'Amsterdam**
**F-75008 Paris (FR)**

EP 0 365 410 B1

Jouve, 18, rue Saint-Denis, 75001 PARIS

## Description

La présente invention concerne l'échange , entre deux fluides, d'éléments contenus dans au moins un de ces fluides, tels que molécules ou ions, par une technique mettant en oeuvre des membranes, du type dialyse, électrodialyse, osmose inverse ou ultrafiltration. Elle a trait plus particulièrement aux cadres qui séparent deux membranes successives et qui permettent la circulation des fluides. De tels cadres seront dénommés cadres séparateurs dans la suite de la présente demande.

Dans les dispositifs d'échange par membrane, les membranes échangeuses sont placées sous forme d'empilement, parallèlement les unes aux autres, séparées et maintenues par les cadres séparateurs. Ces cadres sont composés d'une pièce rigide et imperméable aux fluides dont l'évidement central comporte une structure ajourée par exemple une grille. La pièce rigide appelée plan de joint assure l'étanchéité du dispositif . Elle est percée d'orifices qui , dans l'empilement, assurent l'écoulement des fluides. Ce sont les conduits d'alimentation et d'évacuation du fluide ; la structure ajourée permet la circulation du fluide dans la partie centrale évidée.

Chaque zone d'échange est constituée par un empilement d'une première membrane échangeuse perméable à certains éléments, d'un cadre séparateur et d'une seconde membrane échangeuse perméable aux mêmes ou à d'autres éléments. Pour que l'échange soit réalisé dans de bonnes conditions, il est nécessaire que la circulation du fluide dans chaque zone d'échange soit importante.

Pour augmenter la vitesse de circulation, il est connu de diminuer l'épaisseur de la zone dans laquelle circule le fluide. Cependant du fait de la dilatation des membranes en présence du fluide, il est nécessaire que le plan de joint du cadre séparateur ait une épaisseur plus élevée que la structure ajourée, de sorte que le fluide puisse circuler dans la zone d'échange malgré cette dilatation.

Toutefois on constate que la différence d'épaisseur entre le plan de joint et la structure ajourée provoque des défauts d'étanchéité au niveau des diffuseurs, qui sont des évidements pratiqués dans le plan de joint et qui correspondent aux conduits d'amenée et de sortie du fluide dans la zone d'échange. Ces défauts sont dus à la flexibilité des membranes : celles-ci se creusent au niveau des diffuseurs et laissent s'écouler dans une zone d'échange donnée le fluide, provenant d'un conduit d'alimentation et destiné à alimenter la zone d'échange adjacente dans l'empilement . Ce mélange partiel des fluides est bien sûr inacceptable.

On a déjà envisagé de pallier cet inconvénient en créant sur le plan de joint une surépaisseur entre la structure ajourée et ceux des conduits de circulation du fluide qui ne parcourt pas la zone d'échange considérée. Un tel dispositif est décrit dans le brevet français FR-B-2.189.091.

On a aussi envisagé dans le brevet US-A-4,319,978 de pallier cet inconvénient en réalisant un cadre séparateur composé de cinq couches : une couche interne, deux couches intermédiaires placées de part et d'autre de la couche interne , et deux couches externes placées de part et d'autre des deux couches intermédiaires. Toutes ces couches possèdent une partie centrale évidée ; seule la couche interne possède des diffuseurs. Les couches externes sont compressibles par exemple en néoprène. Les couches intermédiaires sont suffisamment rigides pour éviter la diminution de section des diffuseurs.

Or on a trouvé , et c'est ce qui fait l'objet de l'invention, un dispositif d'échange entre deux fluides d'éléments contenus dans au moins un des fluides qui pallie l'inconvénient précité et qui est d'une conception nouvelle. De manière connue, le dispositif d'échange comporte un empilement de membranes échangeuses et de cadres séparateurs intercalés entre lesdites membranes, chaque cadre étant composé d'un plan de joint imperméable délimitant une partie centrale évidée ; les plans de joint et les membranes sont percés d'orifices, un premier jeu d'orifices constituant des conduits de circulation du premier fluide, un second jeu d'orifices constituant des conduits de circulation du second fluide ; chaque plan de joint comporte des évidements, appelés diffuseurs, qui relient pour un cadre séparateur sur deux la partie centrale aux orifices du premier jeu et pour l'autre la partie centrale aux orifices du second jeu; les diffuseurs et la partie centrale comportent une structure ajourée. De manière caractéristique, le cadre séparateur est composé de quatre feuilles thermoplastiques et de la structure ajourée, les deux feuilles extérieures étant souples et évidées dans les zones des diffuseurs , et les deux feuilles intérieures situées de part et d'autre de la structure ajourée étant semi-rigides et, pour au moins l'une d'elles , ne comportant pas d'évidement dans la zone des diffuseurs , les quatre feuilles étant assemblées selon le plan de joint, exception faite des zones des diffuseurs de telle sorte que dans les zones correspondant aux diffuseurs , la (ou les) feuille semi-rigide ne soit pas assemblés à la structure ajourée et forme un élément de protection.

Ainsi l'élément de protection empêche la membrane , adjacente du cadre séparateur dans l'empilement , de se déformer dans la zone du diffuseur, et les feuilles extérieures souples,en surface du plan de joint, permettent de maintenir une bonne étanchéité interne au dispositif en compensant par leur élasticité la présence de l'élément de protection.

De préférence, l'élément de protection ayant la forme d'un pontet, le plan de joint comporte deux parties en creux dans la zone attenante aux deux orifices qui ne sont pas reliés à la partie centrale. Pour un cadre donné , ces parties en creux font face dans l'empilement aux éléments de protection du cadre adjacent.

Les parties en creux peuvent elles-mêmes être revêtues d'un revêtement formant joint.

Les éléments de protection peuvent s'étendre soit d'un seul côté de la structure ajourée, soit s'étendre de part et d'autre sur les deux faces de la structure ajourée. En d'autres termes à un diffuseur peut correspondre un seul élément de protection ou deux éléments de protection.

Les parties en creux dans la zone attenant aux orifices qui ne sont pas reliés à la partie centrale sont obtenues lors de l'assemblage par écrasement localisé des deux feuilles souples extérieures.

D'autres avantages et caractéristiques de l'invention apparaîtront plus clairement à la lecture de la description qui va être faite d'un exemple de réalisation d'un cadre séparateur simplifié pour dispositif d'échange entre deux fluides, illustrée par le dessin annexé dans lequel :

La figure 1 est une vue schématique de dessus du cadre séparateur,

La figure 2 et une vue en coupe suivant l'axe AA' de la figure 1 d'un empilement partiel comprenant trois cadres séparateurs et quatre membranes échangeuses,

La figure 3 est une vue schématique de dessus du cadre séparateur comportant une partie creuse,

La figure 4 est une vue en coupe suivant l'axe BB' de la figure 3 d'un empilement partiel comprenant trois cadres séparateurs et quatre membranes échangeuses.

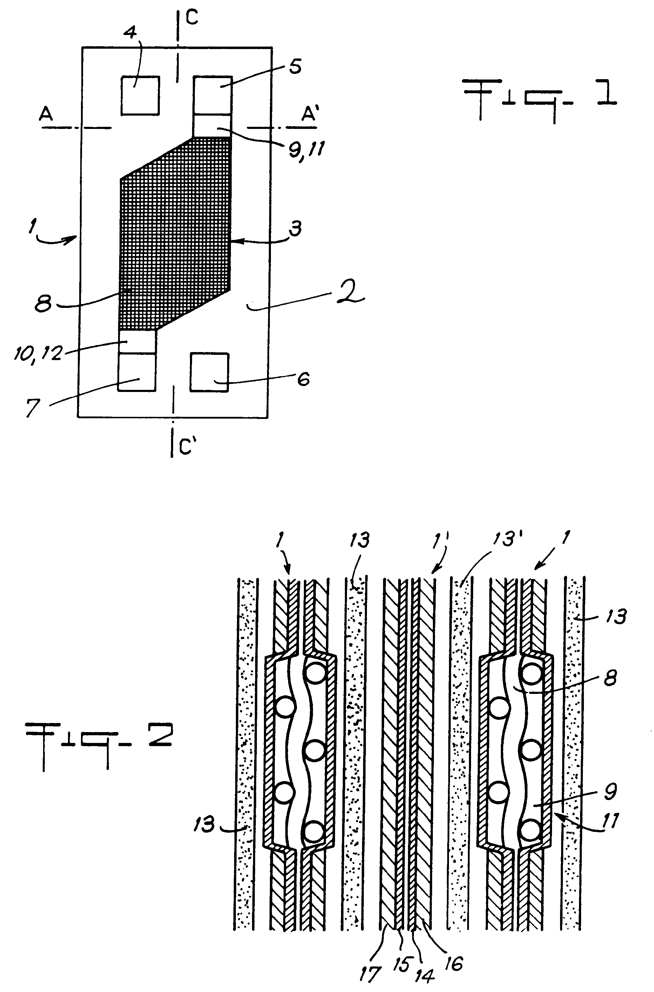

Le cadre séparateur 1, montré à la figure 1, est volontairement simplifié ; il correspond à un dispositif d'échange pilote équipé d'un seul conduit d'alimentation et un seul conduit de sortie pour chacune des deux fluides. Il comprend un plan de joint 2, de forme extérieure rectangulaire. Le plan de joint 2 a une partie centrale évidée 3 qui a dans le cas présent la forme d'un parallélogramme non rectangulaire dont deux côtés sont parallèles aux côtés du plan de joint 2. Le plan de joint 2 a quatre évidements 4,5,6,7, situés deux à deux symétriquement de part et d'autre de la partie centrale 3. De plus le plan de joint 2 comporte deux évidements supplémentaires 9,10, reliant les deux zones correspondant aux sommets les plus éloignés du parallélogramme constituant la partie centrale 3 et les deux évidements 5 et 7 qui font face à ces deux zones.

La partie centrale 3 correspond à la zone d'échange ; les deux évidements 4 et 6 non reliés à la partie centrale 3 correspondent aux conduits de circulation du premier fluide ; les deux évidements 5 et 7 reliés à la partie centrale 3 correspondent aux conduits de circulation du second fluide ; les évidements 9,10 reliant ces derniers à la partie centrale correspondent aux diffuseurs.

Une structure ajourée 8, dénommée toile , est tendue dans la partie centrale 3 et dans les diffuseurs 9,10.

La toile située dans chaque diffuseur est protégée par un élément de protection 11,12, en forme de pontet, prolongeant le plan de joint avec un décrochement au-dessus de la toile sur les deux faces de celle-ci.

Dans un dispositif d'échange par empilement de cadres séparateurs et de membranes échangeuses, un cadre 1 sur deux a la configuration représentée à la figure 1, l'autre cadre 1' sur deux ayant une configuration similaire mais symétrique par rapport à l'axe C-C' : les diffuseurs 9,10 et les pontets 11,12 du cadre 1' sont en regard des conduits 4,6 de circulation du premier fluide.

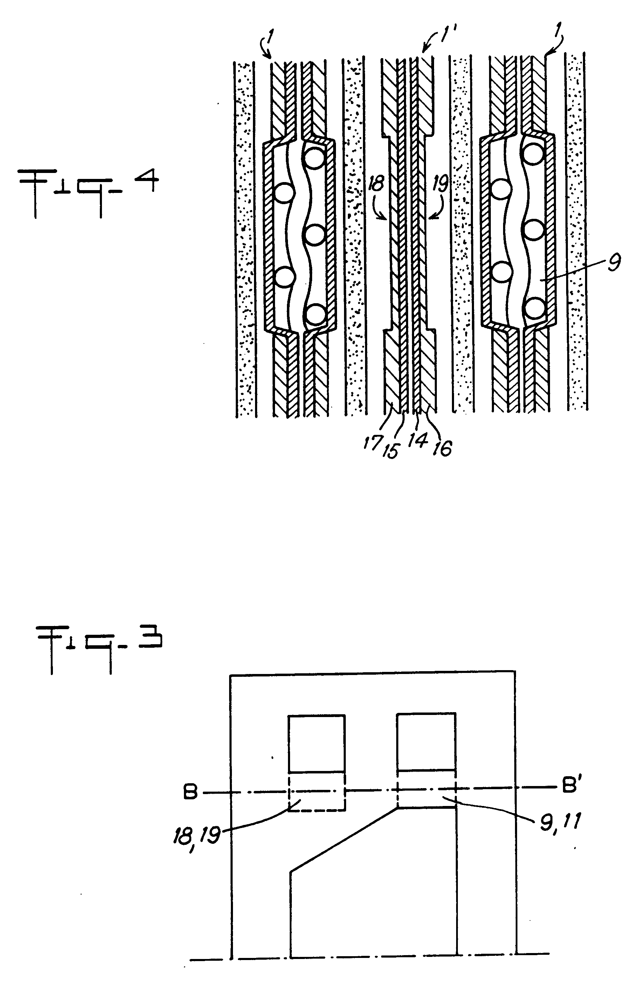

La figure 2 est une vue partielle d'un empilement de trois cadres séparateurs et de quatre membranes échangeuses 13. La partie représentée correspond à une coupe selon l'axe AA' de la zone correspondant à un seul diffuseur 9. Pour la clarté de l'explication , la représentation de la figure 2 montre les différents éléments nettement séparés alors qu'en réalité les cadres 1,1' et les membranes 13 sont en contact étroit.

Le plan de joint 2 est obtenu par l'assemblage , par soudage, notamment par hautes fréquences, de quatre feuilles superposées d'une matière thermoplastique par exemple en polychlorure de vinyle, en éthylène-vinyl-acétate ou en éthylène-butyl-acétate. Les deux feuilles extérieures 16,17 sont à base d'un film souple , tandis que les deux feuilles intérieures 14,15 sont à base d'un film semi-rigide. S'agissant de feuilles de polychlorure de vinyle, le film souple est obtenu par calandrage et comporte des plastifiants , alors que le film semi-rigide est obtenu par extrusion-soufflage et comporte une quantité moindre de plastifiant.

Les feuilles 16,17 souples sont évidées conformément au plan de joint 2 y compris dans la zone des diffuseurs 9,10. Les feuilles 14,15 rigides sont évidées conformément au plan de joint 2 non compris dans la zone des diffuseurs 9,10.

Pour l'assemblage , on intercale entre les deux feuilles 14,15 rigides la toile, par exemple un tissu de polyester ayant une contexture en forme de grille , dont les dimensions sont supérieures à la partie centrale 3 et aux diffuseurs 9,10 de manière à ce que la toile soit maintenue par les feuilles thermoplastiques assemblées.

Lors de l'assemblage, on applique une forte pression à une température suffisante pour atteindre un certain ramollissement des feuilles thermoplastiques, sur l'ensemble du plan de joint 2 exception faite des zones des diffuseurs 9,10. Ainsi dans ces zones les films rigides 14,15 ne sont pas comprimés et constituent les pontets 11,12 de protection des diffuseurs 9,10. Ailleurs les quatre films sont assemblés et forment un plan de joint 2 homogène à l'intérieur duquel la toile 8 est tendue.

Lors du fonctionnement du dispositif d'échange, les deux membranes 13,13' s'appliquent sur toute la surface du plan de joint 2 de part et d'autre du cadre séparateur 1. Au droit du diffuseur 9, les membranes 13,13' s'appliquent sur la surface du pontet de protection respectivement 11,12. La rigidité de la feuille 14,15 constituant le pontet 11,12 empêche la compression de la toile 8 dans le diffuseur 9 et la déformation à cet endroit de la membrane 13. Ainsi on évite les mélanges non acceptables des deux fluides.

L'étanchéité interne de cet empilement est obtenue, malgré la présence des pontets 11,12 grâce à la compressibilité du film souple 16,17 en surface du cadre 1' dans la zone en regard des pontets 11,12.

Si besoin est, cette étanchéité peut être améliorée grâce au mode de réalisation montré aux figures 3 et 4. Des parties en creux 18,19 sont formées lors de l'assemblage dans les feuilles souples 16, 17 d'un cadre séparateur 1', en regard des pontets 11,12 des cadres séparateurs 1 qui lui sent adjacents dans l'empilement 9 .Ces parties en creux 18,19 forment des sortes d'empreintes desdits pontets 11,12, et absorbent le surplus d'épaisseur créé par les pontets. Elles sont obtenues au moment du soudage en augmentant la pression appliquée dans les zones correspondantes.

On peut aussi, pour une étanchéité encore renforcée, effectuer un dépôt de joint liquide ou d'une colle dans la partie en creux 18,19.

L'invention n'est pas limitée au mode de réalisation qui a été décrit mais en couvre toutes les variantes. En particulier dans un dispositif industriel, il y a une multiplicité de conduits d'alimentation et de sortie pour chacun des deux fluides; dans ce cas chaque cadre a le nombre d'orifices et de diffuseurs adaptés , pour une seule partie centrale, mais le fonctionnement décrit ci-dessus est tout-à-fait transposable. L'invention a des applications dans tous les domaines qui concernent les échanges entre deux fluides au travers de membranes échangeuses, perméables à certains éléments, qu'il s'agisse de dialyse, d'électrodialyse, d'ultrafiltration ou d'osmose inverse.

**Revendications**

1. Dispositif d'échange entre deux fluides d'éléments contenus dans au moins un des fluides, du type comportant un empilement de membranes échangeuses (13) et de cadres séparateurs (1) intercalés entre lesdites membranes (13,13'), et selon lequel chaque cadre (1) est composé d'un plan de joint (2) imperméable délimitant une partie centrale (3) évidée, les plans de joint (2) et les membranes (13) sont percés d' orifices, un premier jeu d'orifices (4,6) constituant des conduits de circulation du premier fluide, un second jeu d'orifices (5,7) constituant des conduits de circulation du second fluide , chaque plan de joint comporte des évidements (9,10), appelés diffuseurs , qui relient pour un cadre séparateur (1') sur deux la partie centrale (3) aux orifices (4,6) du premier jeu et pour l'autre (1) la partie centrale aux orifices (5,7) du second jeu , les diffuseurs (9,10) et la partie centrale (3) comportent une structure ajourée (8), caractérisé en ce que le cadre séparateur (1) est composé de quatre feuilles thermoplastiques et de la structure ajourée, les deux feuilles extérieures (16,17) étant souples et évidées dans les zones des diffuseurs (9,10), et les deux feuilles intérieures (14, 15) situées de part et d'autre de la structure ajourée (8) étant semi-rigides et , pour au moins l'une d'elles, ne comportant pas d'évidement dans la zone des diffuseurs (9,10) , les quatre feuilles (14,15,16,17) étant assemblées selon le plan de joint, exception faite des zones des diffuseurs (9,10) de telle sorte que dans les zones correspondant aux diffuseurs , la (ou les) feuille semi-rigide (14,15) ne soit pas assemblée à la structure ajourée (8) et forme un élément de protection (11,12).

2. Dispositif selon la revendication 1 caractérisé en ce que l'assemblage des quatre feuilles (14,15,16,17) thermoplastiques dans le plan de joint, exception faite des zones des diffuseurs (9,10) , est obtenu par soudage sous pression, notamment par haute-fréquence.

3. Dispositif selon la revendication 1 caractérisé en ce que les éléments de protection (9,10) ayant la forme de pontets, le plan de joint (2) comporte des parties en creux (18,19) dans la zone attenante aux orifices (4,6) qui ne sont pas reliés à la partie centrale (3).

4. Dispositif selon la revendication 3 caractérisé en ce que les parties en creux (18,19) sont revêtues d'un revêtement formant joint.

5. Dispositif selon l'une des revendications 3 ou 4 caractérisé en ce que les parties en creux (18,19) dans la zone attenant aux orifices (4,6) qui ne sont pas reliés à la partie centrale (3) sont obtenues lors de l'assemblage par écrasement localisé des deux feuilles souples extérieures (16,17).

**Patentansprüche**

1. Austauschvorrichtung zwischen zwei Fluiden von Elementen, die in mindestens einem der Fluide enthalten sind, dadurch gekennzeichnet, daß sie aus einer Aufeinanderschichtung von Austauschmembranen (13) und zwischen diese Membranen (13,13') eingeschobenen Trennrahmen (1) besteht, daß jeder Rahmen (1) eine undurchlässige Trennebene (2) enthält, die ein ausgespartes Mittelteil (3) begrenzt, wobei die Trennebene (2) und die Membrane (13) mit Öffnungen versehen sind: eine erste Gruppe Öffnungen (4,6) stellt die Durchflußleitungen des ersten Fluids dar, eine zweite Gruppe (5,7) die Durchflußleitungen des zweiten Fluids. Jede Trennebene hat Aussparungen (9,10), sogenannte Diffusoren, die bei jedem zweiten Trennrahmen (1') das Mittelteil (3) mit den Öffnungen (4,6) der ersten Gruppe und bei dem anderen Trennrahmen (1) das Mittelteil (3) mit den Öffnungen (5,7) der zweiten Gruppe verbinden. Die Diffusoren (9,10) und das Mittelteil (3) enthalten eine durchbrochene Struktur (8), dadurch gekennzeichnet, daß der Trennrahmen (1) aus Thermoplastfolien und der durchbrochenen Struktur besteht, wobei die beiden Außenfolien (16,17) geschmeidig und in Höhe der Diffusoren ausgespart und die beiden Innenfolien (14,15), die sich dies- und jenseits der durchbrochenen Struktur (8) befinden, halbstarr sind und mindestens eine davon keine Aussparung im Bereich der Diffusoren (9,10) hat. Die vier Folien (14,15,16,17) werden gemäß Trennebene miteinander verbunden, mit Ausnahme der Bereiche um die Diffusoren (9,10), so daß in diesen Bereichen die halbstarre(n) Folie(n) (14,15) nicht mit der durchbrochenen Struktur (8) verbunden wird/werden und ein Schutzelement (11,12) bildet/n.

2. Vorrichtung gemäß Anspruch 1, dadurch gekennzeichet, daß die Verbindung der vier Thermoplastfolien (14,15,16,17) in der Trennebene, die Bereiche in Höhe der Diffusoren ausgenommen, durch Druckschweißverfahren, insbesondere Hochfrequenzschweißen, hergestellt wird.

3. Vorrichtung gemäß Anspruch 1, dadurch gekennzeichnet, daß die Schutzelemente (9,10) die Form von Bügeln haben und die Trennebene (2) Vertiefungen (18, 19) in dem Bereich aufweist, der an die Öffnungen (4, 6), die nicht mit dem Mittelteil (3) verbunden sind, unmittelbar angrenzt.

4. Vorrichtung gemäß Anspruch 3, dadurch gekennzeichnet, daß die Vertiefungen (18,19) mit einer Auskleidung versehen sind, die dichtend wirkt.

5. Vorrichtung gemäß einem der Ansprüche 3 oder 4, dadurch gekennzeichnet, daß die Vertiefungen (18,19) in dem Bereich, der unmittelbar an die Öffnungen (4,6) angrenzt, die nicht mit dem Mittelteil (3) verbunden sind, bei der Herstellung der Verbindung durch lokalisiertes Komprimieren der beiden geschmeidigen Außenfolien (16,17) entstehen.

## Claims

1. Exchanger device for exchanging items between two fluids, said items being contained in at least one of the fluids, the device comprising a stack of exchanger membranes (13) and of separator frames (1) interposed between said membranes (13, 13'), in which each frame (1) is constituted by an impermeable seal plane (2) delimiting an open central portion (3), the seal planes (2) and the membranes (13) being pierced by orifices, with a first set of orifices (4, 6) constituting ducts for the flow of a first fluid, and with a second set of orifices (5,7) constituting ducts for the flow of a second fluid, each seal plane including openings (9, 10), referred to as diffusers which, in every other separator frame, connect the central portion (3) to the orifices (4, 6) of the first set, and in the rest (1) of other separator frames, connect the central portion to the orifices (5, 7) of the second set, the diffusers (9, 10) and the central portion (3) include an expanded structure (8), characterized in that the separator frame (1) is built up from four thermoplastic sheets and the expanded structure, the two outer sheets (16, 17) being flexible and hollowed out in the zones of the diffusers (9, 10) and the two inner sheets (14, 15) situated on either side of the expanded structure (8) and being semi-stiff, with at least one of them not including an opening over the zones occupied by the diffusers (9, 10), the four sheets (14, 15, 16, 17) being assembled together in the seal plane except in the zones of the diffusers (9, 10), such that in the zones corresponding the to the diffusers, the semi-stiff sheet (or sheets) (14 ,15) is not assembled to the expanded structure (8) and constitutes a protective element (11, 12).

2. Device according to claim 1, characterized in that the four thermoplastic sheets (14, 15, 16, 17) are assembled in the seal plane, other than in the zones of the diffusers (9, 10), by welding under pressure, in particular by high frequency welding.

3. Device according to claim 1, characterized in that the protective elements (9, 10) being in the form of small bridges, seal plane (2) includes hollowed-out portions (18, 19,) in the zone adjacent to the orifices (4, 6) which are not connected to the central portion (3).

4. Device according to claim 3, characterized in that the hollowed-out portions (18, 19) are coated with a seal-forming coating.

5. Device according to one of claims 3 or 4, characterized in that the hollowed-out portions (18, 19) in the zone adjacent to the orifices (4, 6) which are not connected to the central portion (3) are obtained during assembly by localized crushing of the two flexible outer sheets (16, 17).

Fig. 1

Fig. 2

Fig. 4

Fig. 3